# EUROPÄISCHE PATENTANMELDUNG

(11) **EP 0 567 914 A1**
(43) Veröffentlichungstag der Anmeldung: **03.11.1993**
(21) Anmeldenummer: 93106441.4
(22) Anmeldetag: 21.04.1993
(51) Int. Cl.: C02F 9/00, B01D 61/14

(54) **Verfahren und Vorrichtung zur Reinigung von Abwasser**

(30) Priorität: 28.04.1992 DE 4213963
(71) Anmelder: SEITZ-FILTER-WERKE Gmbh und Co., D-55543 Bad Kreuznach (DE); INDUSTRIE- UND UMWELTTECHNIK MEIER Ges.m.H. IUM, A-5222 Jeging (AT); INDUSTRIE- UND UMWELTTECHNIK MEIER Ges.m.H. IUM, A-5222 Jeging (AT)
(72) Erfinder: Dunkel, Andreas, W-6580 Idar-Oberstein (DE); Meier, Siegfried, A-5202 Neumarkt A.W. (AT)
(74) Vertreter: Fuchs, Luderschmidt & Partner Patentanwälte

(57) **Zusammenfassung**

Um Abwasser insbesondere aus lackverarbeitenden Betrieben soweit aufzubereiten, daß es der Kanalisation wieder zugeführt werden kann, wird das Abwasser zunächst in einem Abwasserauffangbehälter aufgefangen, wo sich ein Sediment bildet, und der Überstand des Abwassers wird im Cross-Flow-Verfahren anschließend filtriert. Das verunreinigte Abwasser gelangt aus einer Anlage (1) zunächst in den Auffangbehälter (2) und wird anschließend über eine Verbindungsleitung (18) der Cross-Flow-Filtrationseinrichtung (3) zugeführt. Über eine Filtratleitung (20) wird das Filtrat einem Aktivkohle-Adsorptionsfilter (4) zugeführt und kann so in die Kanalisation gelangen. Von der Filtratleitung (20) kann eine Rückführleitung (8) abzweigen, die in einen Brauchwasserbehälter (6) mündet.

## Beschreibung

Die Erfindung betrifft ein Verfahren zur Reinigung von Abwasser, insbesondere aus lackverarbeitenden Betrieben, wie Druckereien und Lackierereien, bei dem das anfallende Abwasser in einem Abwasserauffangbehälter aufgefangen und dort behandelt wird, das Sediment abgelassen und entsorgt wird, und das Abwasser anschließend filtriert wird. Die Erfindung betrifft auch eine Vorrichtung zur Durchführung dieses Verfahrens.

Bei der Reinigung von Werkzeugen wie Drucksieben und dergleichen in Druckereien, insbesondere Siebdruckereien, fallen hochbelastete Abwässer an, die u.a. Lösungsmittel und Farbpartikel enthalten. Eine Einleitung dieses Abwassers in den Vorfluter ist nicht möglich. Eine biologische Reinigung ist nur bedingt durchführbar, da der Gehalt an aromatischen Kohlenwasserstoffen für eine biologische Klärung zu hoch ist und eine deutliche Färbung des Wassers vorliegt.

Ein Abtrennen der Inhaltsstoffe und zwar der Farben, Schmutzstoffe und organischen Lösungsmittel ist daher unbedingt notwendig, um entweder das Abwasser in einen Kanal, in eine Kläranlage oder dergleichen einleiten zu können.

Aus der EP 02 50 394 ist ein Verfahren und eine Vorrichtung zum Reinigen von Abwasser aus Druckereien, insbesondere Siebdruckbetrieben bekannt. Das verunreinigte Abwasser wird zunächst einem Absetzbehälter zugeführt und gelangt dann in eine Filtriereinrichtung, die als Grobfilter mit z.B. Glaswolle ausgebildet ist. In einer nachgeordneten Kammerfilterpresse wird eine Feinfiltration durchgeführt, um die Farbpartikel zu entfernen. Hieran schließt sich eine Desorptionseinrichtung und ein weiteres Nachfiltern an. Der Nachteil dieses Verfahrens und dieser Vorrichtung besteht darin, daß das Abwasser insgesamt fünf Stationen durchlaufen muß, bis die gewünschte Wasserqualität erhalten wird. Dieses bekannte Verfahren ist daher sehr kostenintensiv.

Aufgabe der Erfindung ist es daher, ein Verfahren und eine Vorrichtung bereitzustellen, mit der das Abwasser aus lackverarbeitenden Betrieben, insbesondere aus Druckereien und Lackierereien auf einfache Weise so weit aufbereitet werden kann, daß es der öffentlichen Kanalisation zugeführt werden kann.

Diese Aufgabe wird mit einem Verfahren gemäß Anspruch 1 und einer Vorrichtung gemäß Patentanspruch 8 gelöst.

Das erfindungsgemäße Verfahren beruht darauf, daß zunächst eine Sedimentation des Abwassers durchgeführt wird und der Überstand, der bei der Sedimentation anfällt, einer Cross-Flow-Filtration unterzogen wird. Durch die Sedimentation werden die groben Partikel, wie z. B Farbpartikel ausgefällt, die dann getrennt entsorgt werden können. Das bei der Cross-Flow-Filtration erhaltene Filtrat ist soweit gereinigt, daß es nach einer Adsorptionsbehandlung, vorzugsweis über Aktivkohle, der öffentlichen Kanalisation zugeführt werden kann.

Der Vorteil der Cross-Flow-Filtration gegenüber den bekannten Filtrationsverfahren besteht bei der Reinigung von Siebdruckabwässern darin, daß
1 der Prozeß automatisierbar ist,
2. kontinuierlich abläuft,
3. ohne Einweg-Filtermittel (Wegwerfprodukte) auskommt,
4. mehrere Filtrationsschritte durch in der Regel eine Filtration ersetzt wird, und
5. im Vergleich zu Emulsionsspaltanlagen eine bessere Abwasserqualität und geringerer Chemikalienverbrauch erzielt wird und das Filtrat soweit gereinigt wird, daß es als Brauchwasser für Reinigungszwecke wiederverwendet werden kann.

Um die Entsorgung des bei der Cross-Flow-Filtration anfallenden Retentates zu erleichtern, wird dieses vorzugsweise dem Abwasserauffangbehälter wieder zugeführt, wo es an der Sedimentation teilnimmt und über das Sediment letztendlich abgeführt werden kann.

Zusätzlich kann das Abwasser im Abwasserauffangbehälter in Bewegung gehalten werden, was durch eine zusätzliche Rühreinrichtung bewirkt oder aber durch die Pumpe der Cross-Flow-Filtrationseinrichtung beeinflußt werden kann.

Die Cross-Flow-Filtration wird vorzugsweise mittels Rohr-, Kapillar- oder Flachmodulen durchgeführt.

Da die Qualität des bei der Cross-Flow-Filtration gewonnenen Filtrates bereits so gut ist, daß es auch zu anderen Zwecken eingesetzt werden kann, wird ein Teil des Filtrates einem Brauchwasserbehälter zugeführt und dort mit Frischwasser vermischt. Vorzugsweise wird dem Filtrat hier noch Desinfektionsmittel zugemischt. Dieses so aufbereitete Filtrat kann dann zu Reinigungszwecken eingesetzt werden und beispielsweise zu einer Siebdruckreinigungsanlage, aus der das Abwasser stammt, rückgeführt werden.

Je nach Art der zu behandelnden Abwässer kann während oder nach der Cross-Flow-Filtration noch eine pH-Korrektur des zu reinigenden Abwassers vorgenommen werden. Dies geschieht dadurch, daß mittels durch geeigneter Dosiervorrichtungen entsprechende Laugen und Säuren zugesetzt werden.

Die erfindungsgemäße Vorrichtung weist einen Abwasserauffangbehälter auf, der mit einem ersten und einem zweiten Auslaß versehen ist, wovon der erste Auslaß mit dem Unfiltrateingang einer Cross-Flow-Filtrationseinrichtung verbunden ist. Der Filtratausgang der Cross-Flow-Filtrationseinrichtung ist über eine Filtratleitung an ein Aktivkohle-Adsorptionsfilter angeschlossen.

Vorzugsweise ist der Abwasserauffangbehälter mit einer Rühreinrichtung versehen, um das Abwasser bei evtl. notwendiger Flockungsmittelzugabe zu durchmischen.

Die Durchmischung kann alternativ mittels der Speisepumpe der Cross-Flow-Filtrationsanlage und einer zusätzlichen Rücklaufleitung erfolgen.

Der Retentatausgang der Cross-Flow-Filtrationseinrichtung ist über eine Retentatleitung mit einem zweiten Einlaß des Abwasserauffangbehälters verbunden, so daß das bei der Cross-Flow-Filtration anfallende Retentat dem aufzubereitenden Abwasser wieder zugeführt werden kann.

Die Filtratleitung, die zum Aktivkohle-Adsortionsfilter führt, kann gemäß einer weiteren Ausführungsform eine Abzweigung enthalten, so daß ein Teil des Filtrates einem Brauchwasserbehälter zugeführt werden kann, wo eine Aufbereitung mit Frischwasser vorgenommen wird. Das so aufbereitete Brauchwasser kann dann zu Reinigungszwecken eingesetzt werden.

Mit dieser Vorrichtung kann somit in die öffentliche Kanalisation einleitfähiges Abwasser oder wiederverwendbares Recyclingwasser für Reinigungszwecke erhalten werden. Insbesondere in Reinigungsanlagen von Lackiererein und dergleichen wird der Frischwassereinsatz durch konsequente Kreislaufführung des aufbereiteten Nutzwassers sowie durch die chemikalienarme Reinigung des Abwassers minimiert.

Die Cross-Flow-Filtrationseinrichtung kann ein Membranmodul enthalten, das eine Porenweite von 0,2 µm aufweist. Vorzugsweise ist diese Cross-Flow-Filtrationseinrichtung mit zwei Kreiselpumpen ausgestattet. Als Filtermedium kommen lösungsmittelbeständige Membranen in Frage, deren mittlere Porengröße 0,2 µm und feiner ist.

Die Anlagen sind modular aufgebaut, um eine Anpassung an die zu behandelnde Abwassermenge vornehmen zu können.

Beispielhafte Ausführungsformen der Erfindung werden nachfolgend anhand der Zeichnungen näher erläutert.

Es zeigen:
- Figur 1: die schematische Darstellung der erfindungsgemäßen Vorrichtung,
- Figur 2: die Fließbildzeichnung einer Cross-Flow-Filtrationseinrichtung.

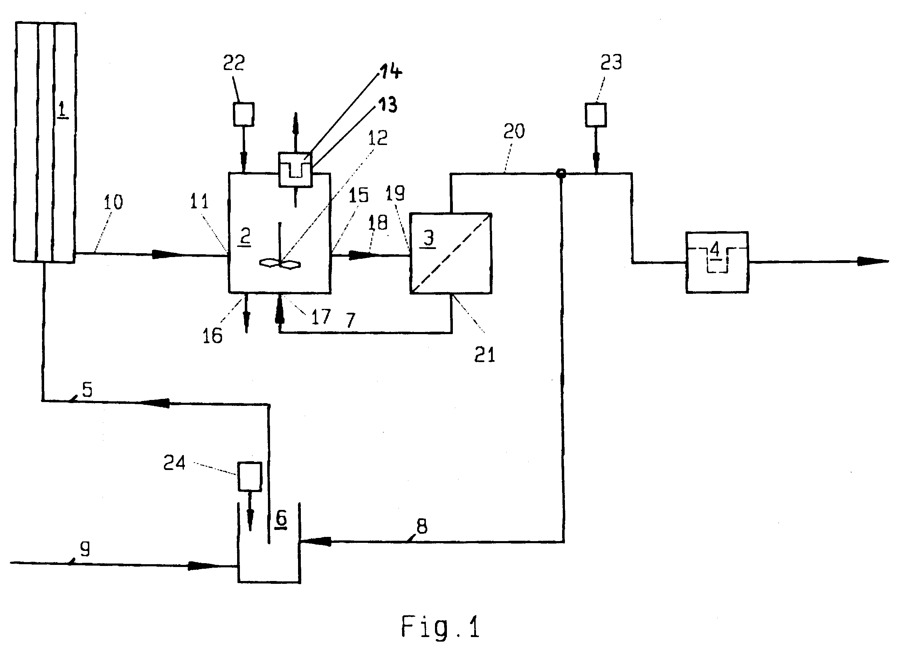

In der Figur 1 ist die Abwasserreinigungsvorrichtung schematisch dargestellt. Das in einer Siebdruckreinigunganlage 1 anfallende Abwasser wird über eine Abwasserleitung 10 einem ersten Einlaß 11 eines Auffangbehälters 2 zugeleitet. In diesem Auffangbehälter 2 wird das aufzubereitende Abwasser mittels Rühreinrichtung 12 durchmischt. Das durch die Sedimentation anfallende Sediment wird durch einen zweiten Auslaß 16 abgeführt und getrennt entsorgt. Der Überstand wird über einen ersten Auslaß 15 und eine Verbindungsleitung 18 einer Cross-Flow-Filtrationseinrichtung 3 zugeführt. Der Abwasserauffangbehälter 2 besitzt eine Entlüftung 13, die bei Bedarf mit einem Aktivkohlefilter 14 versehen ist.

Das über den Unfiltrateingang 19 der Cross-Flow-Filtrationseinrichtung 3 zugeführte Abwasser wird im Tangentialstromverfahren filtriert, wobei das Filtrat über eine Filtratleitung 20 einem Aktivkohle-Adsorptionsfilter 4 zugeführt wird. Nach dem Durchlaufen des Aktivkohle-Adsorptionsfilters 4 wird das so aufbereitete Abwasser der Kanalisation zugeführt.

Von der Filtratleitung 20 zweigt eine Rückführleitung 8 ab, die in einen Brauchwasserbehälter 6 mündet, der an eine Frischwasserleitung 9 angeschlossen ist. Im Brauchwasserbehälter 6 wird das Filtrat mit dem Frischwasser vermischt und über die Verbindungsleitung 5 der Siebdruckwerkzeugreinigungsanlage 1 wieder zu Reinigungszwecken zugeführt. Der Brauchwasserbehälter 6 ist mit einer Dosiereinrichtung 24 für die Zugabe von Desinfektionsmitteln versehen.

Ebenfalls in die Filtratleitung 20 ist eine Dosiereinrichtung 23 für die Zugabe von Laugen oder Säuren zur pH-Korrektur angeschlossen.

Die Cross-Flow-Filtrationseinrichtung 3 besitzt einen Retentatauslaß 21, durch den das Retentat über eine Retentatleitung 7 einem zweiten Einlaß 17 des Abwasserauffangbehälter 2 zugeführt wird.

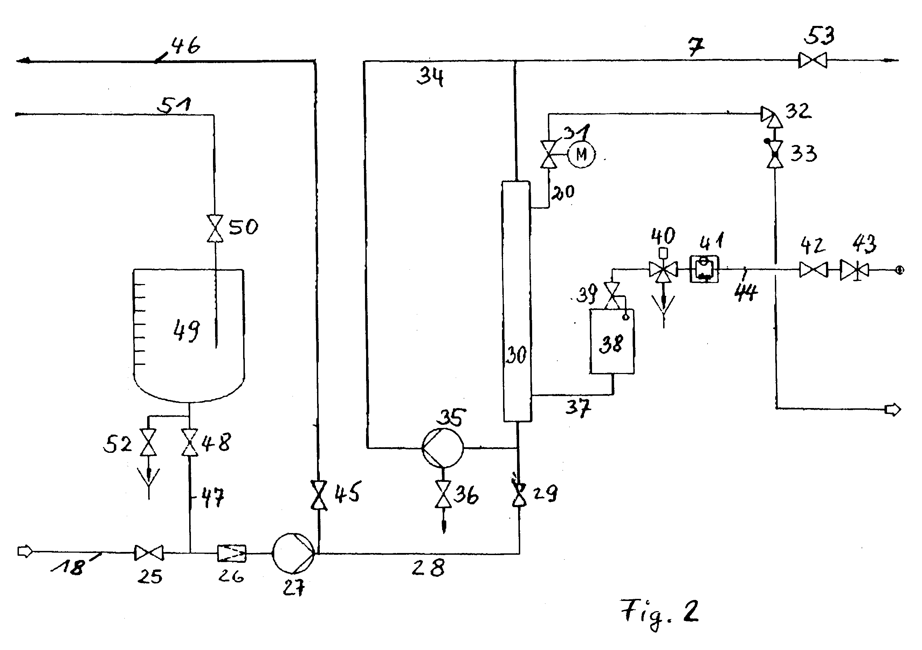

In der Figur 2 ist ein Fließbild einer Cross-Flow-Filtrationseinrichtung dargestellt, die nachfolgend beschrieben wird.
1. Filtration
   Das im Auffangbehälter 2 vorbehandelte Abwasser wird über die Verbindungsleitung 18, Absperrventil 25, Eckrohrsieb 26 mittels Speisepumpe 27, der Unfiltratzufuhrleitung 28 über Ventil 29 der Kreislaufleitung 34 unter Überdruck zugeführt. Die Kreislaufpumpe 35 erzeugt die Tangentialströmung über Crossflow-Modul 30. Über die Filtratleitung 20, das geöffnete Motorventil 31, Eckventil 32, Rückschlagklappe 33 wird das Filtrat abgeführt. Gleichzeitig wird das Retentat über die Retentatleitung 7 und bei gleichzeitiger Anlagenentlüftung über Entlüftungsventil 53 kontinuierlich dem Auffangbehälter 2 zugeführt.
2. Rückspülung
   Über die Druckluftleitung 44 und das Druckregelventil 43, das geöffnete Absperrventil 42, den Öl- und Wasserabscheider 41, das 3/2 Wegeventil 40, Absperrventil 39 wird die Wassersäule im Rückspültopf 38 über die Rückspülleitung 37 in das Crossflow-Modul 30, bei geschlossenem Motorventil 31 gedrückt.
3. Reinigung
   Über Wasserleitung 51, Absperrventil 50 wird der Reinigungsbehälter 49 befüllt und gegebenenfalls Reinigungsmittel zugesetzt. Über Reinigungsleitung 47, Absperrventil 48, Eckrohrsieb 26 mittels Speisepumpe 27, der Unfiltratleitung 28 über Ventil 29, der Kreislaufleitung 34 wird das Crossflow-Modul 30 befüllt und über die Retentatleitung 7, das Entlüftungsventil 53, entlüftet.
   Bei abgesperrter Filtratleitung 20, abgesperrter Rückspülleitung 37 wird die Reinigungsflüssigkeit mittels Überströmpumpe 35 im Kreislauf gefahren. Durch den Energieeintrag der Überströmpumpe 35 in den geschlossenen Kreislauf wird die Reinigungsflüssigkeit erwärmt. Bei Erreichen der vorgegebenen Temperatur schaltet die Crossflow-Filtrationseinrichtung automatisch ab.
   Die Entleerung der Anlage nach Reinigung erfolgt über Ventil 36.
4. Durchmischung Auffangbehälter 2
   Das im Auffangbehälter 2 gesammelte Abwasser wird über die Verbindungsleitung 18, Absperrventil 25, Eckrohrsieb 26, mittels Speisepumpe 27 über Drucklaufleitung 46, Absperrventil 45 geführt. Dadurch wird der Inhalt des Auffangsbehälters 2, vorzugsweise nach Flockungsmittelzugabe durchmischt. Ventil 29 bleibt geschlossen.

Drei Verfahrensbeispiele werden nachfolgend beschrieben:

### Verfahrensbeispiel 1:

Abwasser aus Verarbeitung wasserlöslicher Farbstoffe für Siebdruck.

Das Abwasser wurde in einen 1 cbm Vorlagebehälter gegeben.

| | |
|---|---|
| Aussehen: | gelb/trüb |
| Geruch: | aromatisch |
| Temperatur: | 12°C |
| pH-Wert: | 7,3 |
| Produkt neigt zur Schäumung Trokensubstanz: | 0,4% |
| CSB-Wert: | 8.800 mg/l am Eingang der CMF-Anlage |
| BSB-5: | 500 mg/l am Eingang der CMF-Anlage |

Nach Crossflow-Filtration über PP-Rohrmodul mit 0,2 µm Trenngrenze:

| | |
|---|---|
| Filtrat: | gelblich/klar |
| Geruch: | gering aromatisch |
| CSB-Wert: | 668 mg/l |
| BSB-5: | 185 mg/l |

Nach Durchlauf eines Aktiv-Kohlefilters mit einer Kontaktzeit von 25 Minuten ist das Wasser farblos klar.

| | |
|---|---|
| Geruch: | gering aromatisch |
| CSB-Wert: | 124 mg/l |
| BSB-5: | 10 mg/l |

Der pH-Wert betrug vor CMF 7,3 und nach Aktivkohle 7,6. Es erfolgte keine Vorfällung und keine pH-Wert-Einstellung.

### Verfahrensbeispiel 2

Abwasser wie in Beispiel 1 wurde im Vorlagebehälter mit Flockungsmittel versetzt und 10 Minuten gut durchmischt.

Die Filtration wurde nach 30 Minuten Einwirkzeit begonnen.

Die Zuführung zur CMF-Anlage erfolgte aus dem klaren Überstand des Vorlagebehälters.

Folgende Daten wurden ermittelt:

| | |
|---|---|
| CSB-Wert nach Fällung: | 5,200 mg/l |
| nach CMF: | 710 mg/l |
| nach Aktivkohle: | 128 mg/l |

Der pH-Wert lag vor der CMF-Anlage bei 6,8 und nach dem Aktivkohlefilter bei 7,1.

Durch die Vorfällung des Abwassers wurde eine Leistungssteigerung von ca. 30% bei der CMF-Filtraton erzielt.

### Verfahrensbeispiel 3

Abwasser aus Siebdruckereien bei ausschließlicher Verwendung von Farbsystemen auf Basis organischer Lösungsmittel.

Folgende Daten wurden ermittelt:

| | | |
|---|---|---|
| Vor CMF: | CSB-Wert | 2,100 mg/l |
| nach CMF: | CSB-Wert: | 830 mg/l |
| nach Aktivkohlefilter: | CSB-Wert: | 90 mg/l |

### Bezugszeichen:

- 1: Siebdruckwerkzeugreinigungsanlage
- 2: Auffangbehälter für Unfiltrat
- 3: Cross-Flow-Filtrationseinrichtung
- 4: Aktivkohle-Adsorptionsfilter
- 5: Verbindungsleitung
- 6: Brauchwasserbehälter
- 7: Retentatleitung
- 8: Rückführleitung
- 9: Frischwasserleitung
- 10: Abwasserleitung
- 11: erster Einlaß
- 12: Rühreinrichtung
- 13: Entlüftungsrohr
- 14: Aktivkohlefilter
- 15: erster Auslaß
- 16: zweiter Auslaß
- 17: zweiter Einlaß
- 18: Verbindungsleitung
- 19: Unfiltrateingang
- 20: Filtratleitung
- 21: Retentatauslaß
- 22: Fällmitteldosierung
- 23: Dosiereinrichtung für pH-Korrektur
- 24: Dosiereinrichtung für Desinfektionsmittelzusätze
- 25: Absperrventil
- 26: Eckrohrsieb
- 27: Speisepumpe
- 28: Unfiltratzuführleitung
- 29: Absperrventil
- 30: Crossflow-Modul
- 31: Motorventil
- 32: Eckventil
- 33: Rückschlagventil
- 34: Kreislaufleitung
- 35: Überströmpumpe
- 3: 6 Entleerungsventil
- 37: Rückspülleitung
- 38: Rückspültopf
- 39: Absperrventil
- 40: 3/2 Wegeventil
- 41: Öl- und Wasserabscheider
- 42: Absperrventil
- 43: Druckregelventil
- 4: 4 Druckluftleitung
- 45: Absperrventil
- 46: Rücklaufleitung
- 47: Reinigungsleitung
- 48: Absperrventil
- 49: Reinigungsbehälter
- 50: Absperrventil
- 51: Wasserleitung
- 52: Entleerungsventil
- 53: Entlüftungsventil

## Patentansprüche

1. Verfahren zum Reinigen von Abwasser, insbesondere aus lackverarbeitenden Betrieben, wie Druckereien und Lackierereien, bei dem
das anfallende Abwasser in einem Abwasserauffangbehälter aufgefangen und dort behandelt wird,
das Sediment abgelassen und entsorgt wird, und das Abwasser anschließend filtriert wird, dadurch gekennzeichnet,
daß der Überstand des Abwassers im Abwasserauffangbehälter im Cross-Flow-Verfahren filtriert wird und zumindest ein Teil des Filtrats über einen Aktivkohle-Adsorptionsfilter der Kanalisation zugeführt wird.

2. Verfahren nach Anspruch 1, dadurch gekennzeichnet, daß das Abwasser gefällt und /oder gerührt wird.

3. Verfahren nach einem der Ansprüche 1 oder 2, dadurch gekennzeichnet, daß der Überstand im Tangentialstromverfahren mittels Rohr-, Kapillar- oder Flachmodulen filtriert wird.

4. Verfahren nach einem der Ansprüche 1 bis 3, dadurch gekennzeichnet, daß das bei der Cross-Flow-Filtration anfallende Retentat dem Abwasserauffangbehälter zugeführt wird.

5. Verfahren nach einem der Ansprüche 1 bis 4, dadurch gekennzeichnet, daß ein Teilstrom des bei der Cross-Flow-Filtration anfallenden Filtrates einem Brauchwasserbehälter zugeführt und dort mit Frischwasser vermischt wird.

6. Verfahren nach Anspruch 5, dadurch gekennzeichnet, daß dem Filtrat im Brauchwasserbehälter Desinfektionsmittel zugesetzt wird.

7. Verfahren nach einem der Ansprüche 1 bis 6, dadurch gekennzeichnet, daß nach der Cross-Flow-Filtration eine pH-Korrektur vorgenommen wird.

8. Vorrichtung zur Reinigung von Abwässern, insbesondere von Abwässern aus lackverarbeitenden Betrieben, wie Druckereien und Lackierereien,
mit einem Abwasserauffangbehälter und einer nachgeordneten Filtriereinrichtung, dadurch gekennzeichnet, daß die Filtriereinrichtung eine Cross-Flow-Filtrationseinrichtung (3) ist und der Filtratausgang der Filtrationseinrichtung (3) über eine Filtratleitung (20) an ein Aktivkohle-Adsorptionsfilter (4) angeschlossen ist.

9. Vorrichtung nach Anspruch 8, dadurch gekennzeichnet, daß der Abwasserauffangbehälter (2) eine Rühreinrichtung (12) aufweist.

10. Vorrichtung nach Anspruch 8 oder 9, dadurch gekennzeichnet, daß der Retentatauslaß (21) der Cross-Flow-Filtrationseinrichtung (3) über eine Retentatleitung (7) mit dem Abwasserauffangbehälter (2) verbunden ist.

11. Vorrichtung nach einem der Ansprüche 8 bis 10, dadurch gekennzeichnet, daß die Filtratleitung (20) über eine Filtratrückführleitung (8) mit einem Brauchwasserbehälter (6) verbunden ist, der an eine Frischwasserzuleitung (9) angeschlossen ist.

12. Vorrichtung nach einem der Ansprüche 8 bis 11 dadurch gekennzeichnet, daß der Brauchwasserbehälter (6) an eine Desinfektionseinrichtung (24) angeschlossen ist.

13. Vorrichtung nach einem der Ansprüche 8 bis 12, dadurch gekennzeichnet, daß in der Filtratleitung (20) eine Dosiereinrichtung (23) für die Zugabe von Substanzen zur pH-Korrektur vorgesehen ist.
